(19) **Europäisches Patentamt European Patent Office Office européen des brevets**

(11) **EP 4 217 686 B1**

(12) **FASCICULE DE BREVET EUROPEEN**

(45) Date de publication et mention
de la délivrance du brevet:
**26.11.2025 Bulletin 2025/48**

(21) Numéro de dépôt: **21793980.0**

(22) Date de dépôt: **21.09.2021**

(51) Classification Internationale des Brevets (IPC):
***G01F 1/66*** *(2022.01)* ***G01F 1/667*** *(2022.01)*

(52) Classification Coopérative des Brevets (CPC):
**G01F 1/668; G01F 1/66**

(86) Numéro de dépôt international:
**PCT/FR2021/051617**

(87) Numéro de publication internationale:
**WO 2022/064132 (31.03.2022 Gazette 2022/13)**

(54) **PROCÉDÉ DE MESURE DE DÉBIT D'UN FLUIDE DANS UNE CANALISATION**

VERFAHREN ZUR MESSUNG DER DURCHFLUSSRATE EINES FLUIDS IN EINER LEITUNG

METHOD FOR MEASURING THE FLOW RATE OF A FLUID IN A PIPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2020 FR 2009589**

(43) Date de publication de la demande:
**02.08.2023 Bulletin 2023/31**

(73) Titulaire: **Integra Metering AG**
**4106 Thervil (CH)**

(72) Inventeurs:
• **GUWANG, Marcel**
**31120 LACROIX-FALGARDE (FR)**
• **MORIN, Maxime**
**31320 PECHBUSQUE (FR)**
• **RAMOND, Alain**
**31000 TOULOUSE (FR)**

(74) Mandataire: **BARRE LAFORGUE**
**35, rue Lancefoc**
**31000 Toulouse (FR)**

(56) Documents cités:
EP-A1- 1 913 342   EP-A1- 1 921 424
EP-A1- 3 299 774   EP-A1- 3 355 035
EP-A1- 3 611 480

**Description**

**[Domaine technique]**

L'invention concerne un procédé de mesure de débit d'un fluide dans une canalisation. L'invention concerne également un débitmètre adapté pour mettre en œuvre un tel procédé de mesure de débit.

**[État de la technique antérieure]**

On connaît déjà, notamment de US 2011/0246098, un procédé de mesure d'un débit de fluide s'écoulant dans la canalisation entre deux transducteurs à ultrasons. Le procédé de mesure comprend deux cycles successifs de mesure d'un temps de propagation d'une onde ultrasonore entre les deux transducteurs. En particulier, chaque cycle comprend :

- une étape d'émission d'une onde ultrasonore par un premier transducteur à ultrasons ;

- une étape de réception de ladite onde ultrasonore par un deuxième transducteur à ultrasons, le premier transducteur et le deuxième transducteur étant disposés en vis-à-vis l'un de l'autre selon une direction diagonale par rapport à un axe longitudinal de la canalisation ; et

- une étape de mesure d'un temps de propagation de ladite onde ultrasonore depuis le premier transducteur à ultrasons jusqu'au deuxième transducteur à ultrasons,

le premier transducteur à ultrasons pour un cycle donné correspondant au deuxième transducteur à ultrasons pour un cycle succédant directement ledit cycle donné et le deuxième transducteur à ultrasons pour un cycle donné correspondant au premier transducteur à ultrasons pour le cycle succédant directement ledit cycle donné.

Ainsi, le transducteur à ultrasons fonctionnant en tant qu'émetteur lors d'un cycle donné fonctionne en tant que récepteur lors du cycle qui suit ce cycle donné. De même, le transducteur à ultrasons fonctionnant en tant que récepteur lors d'un cycle donné fonctionne en tant qu'émetteur lors du cycle qui suit ce cycle donné.

En particulier, l'étape d'émission du deuxième cycle effectué succède à l'étape de réception du premier cycle après une durée d'intercycle de quelques millisecondes (4ms) le temps que les ultrasons s'évanouissent.

Ce procédé comprend en outre une étape de calcul d'un débit de fluide dans laquelle le débit de fluide est calculé à partir d'une différence entre le temps de propagation mesuré lors du premier cycle de mesure effectué et du temps de propagation mesuré lors du second cycle de mesure.

Le fait de calculer le débit de fluide à partir d'une différence entre deux temps de propagation permet d'obtenir des résultats plus fiables que si le débit de fluide était calculé à partir d'un unique temps de propagation. En effet, le calcul du débit de fluide à partir d'une différence entre deux temps de propagation permet de réduire l'influence de l'environnement sur les mesures des temps de propagation.

Ce procédé peut être répété de façon à mesurer plusieurs débits à des instants différents.

Les inventeurs ont constaté que la précision des débits calculés selon un tel procédé de mesure de débit n'est pas toujours régulière. Ainsi, les débits calculés par un tel procédé de mesure de débit se révèlent donc relativement peu fiables.

On connait aussi des procédés de mesure d'un débit de fluide s'écoulant dans une canalisation entre deux transducteurs qui utilisent un procédé de mesure de temps de vol par compensation de phase. Ce procédé de mesure est également connu sous le nom de « phase shift ». Les documents EP 1 913 342 et EP 3 355 035 décrivent de tels procédés de mesure du temps de propagation d'un flux d'ondes ultrasonores par compensation de phase. Plus précisément, ce procédé consiste à émettre au moyen d'un premier transducteur émetteur, un flux d'ondes ultrasonores en direction d'un second transducteur fonctionnant comme récepteur. Le temps de propagation du flux d'ondes est alors déterminé par la différence de phase mesurée entre le flux d'ondes émis et le flux d'ondes réceptionné. Ce procédé de mesure implique que les calculs de la célérité du flux de fluide qui s'écoule dans la canalisation soient réalisés dans le domaine fréquentiel.

La précision de ce procédé de mesure diminue au-delà d'une certaine distance entre le transducteur émetteur et le transducteur récepteur. De plus, ce procédé nécessite l'emploi d'un grand nombre d'impulsions électriques ce qui implique un temps d'éveille prolongé de l'électronique et donc une consommation d'énergie importante.

L'invention vise à pallier ces inconvénients.

**[Exposé de l'invention]**

L'invention vise donc à proposer un procédé de mesure de débit d'un fluide permettant de déterminer des débits fiables et précis.

L'invention vise également à proposer un tel procédé de mesure de débit qui soit simple, rapide et peu coûteux en énergie.

L'invention vise également à proposer un débitmètre adapté pour mettre en œuvre un tel procédé de mesure de débit.

L'invention concerne un procédé de mesure de débit d'un fluide dans une canalisation à l'aide d'au moins deux transducteurs à ultrasons, le procédé comportant une génération de cycles successifs commandés par une unité de commande, chaque cycle comprenant :

- une étape d'émission d'une onde ultrasonore par un premier transducteur à ultrasons parmi lesdits au moins deux transducteurs à ultrasons ;

- une étape de réception de ladite onde ultrasonore par un deuxième transducteur à ultrasons parmi lesdits au moins deux transducteurs à ultrasons ; et

- une étape de mesure d'un temps de propagation de ladite onde ultrasonore depuis le premier transducteur à ultrasons jusqu'au deuxième transducteur à ultrasons,

le premier transducteur à ultrasons pour un cycle donné correspondant au deuxième transducteur à ultrasons pour un cycle succédant directement ledit cycle donné et le deuxième transducteur à ultrasons pour un cycle donné correspondant au premier transducteur à ultrasons pour le cycle succédant directement ledit cycle donné,
le procédé étant caractérisé en ce qu'un cycle donné est séparé d'un cycle précédant directement ledit cycle donné d'une durée, dite durée intercycle, supérieure ou égale à 15 ms, et en ce qu'il comprend au moins une étape de calcul de débit de fluide dans laquelle un débit du fluide s'écoulant au moment d'un cycle donné dans la canalisation est calculé à partir d'une différence entre le temps de propagation mesuré pour ledit cycle donné et une moyenne entre le temps de propagation mesuré pour le cycle précédant et le temps de propagation mesuré pour le cycle succédant directement ledit cycle donné.

On désigne par l'expression « le cycle succédant directement le cycle donné » le premier cycle qui suit le cycle donné dans la succession des cycles effectués dans le procédé de mesure. De même, on désigne par l'expression « le cycle précédant directement le cycle donné » le dernier cycle qui précède le cycle donné dans l'ensemble des cycles effectués dans le procédé de mesure.

En particulier, la différence effectuée lors de l'étape de calcul de débit est multipliée par -1, un cycle sur deux, afin de conserver un résultat de même signe.

Ladite durée intercycle est de quelques millisecondes, c'est-à-dire une durée suffisante pour que les ondes ultrasonores s'évanouissent. Dans certains modes de réalisation avantageux et selon l'invention, ladite durée intercycle est supérieure au temps d'évanouissement des ondes ultrasonores, notamment supérieure à 15 ms, en particulier comprise entre 15 ms et 4000 ms (4 secondes), et plus particulièrement comprise entre 100 ms et 2000 ms (2 secondes) et par exemple comprise entre 200 ms et 800 ms.

De préférence, le débit de fluide est déterminé à partir d'un tableau prédéterminé dans lequel des résultats de différence de temps de propagation sont associés à des débits. Le tableau peut également prendre en compte la température du fluide.

Dans certains modes de réalisation avantageux et selon l'invention, le procédé de mesure comprend une étape de mise en veille au moins partielle de l'unité de commande entre chaque cycle.

Dans des modes de réalisation de l'invention, lorsque l'unité de commande est réveillée pour effectuer une étape de mesure de débit, le procédé comprend une période de stabilisation de l'unité de commande, chaque cycle étant effectué pendant ladite période de stabilisation de l'unité de commande. Pour compenser, l'instabilité de l'électronique notamment des transducteurs et de l'unité de commande, l'étape d'émission de l'onde ultrasonore de chaque cycle est réalisée au même moment de la période de stabilisation ce qui permet d'obtenir pour plusieurs cycles successifs une émission de l'onde ultrasonore dans le même état d'instabilité. La répétition des étapes de chaque cycle selon une chronologie déterminée permet de compenser les erreurs pouvant résulter de la période de stabilisation de l'unité de commande. De plus, cela permet de réduire le temps d'éveil de l'unité de commande et donc de réduire la consommation d'énergie.

Dans des modes de réalisation de l'invention, l'onde ultrasonore est générée par un premier transducteur fonctionnant en tant qu'émetteur à partir d'une impulsion électrique carrée. Contrairement au procédé de mesure par compensation de phase, l'émission d'une seule impulsion électrique pour générer une onde ultrasonore permet d'améliorer la précision de la mesure en fournissant une onde ultrasonore dont le signal est court. Par exemple, le signal peut être d'une durée d'une demi-longueur d'onde. Le temps d'éveil de l'électronique du débitmètre et la consommation d'énergie électrique sont ainsi réduits.

Dans des modes de réalisation de l'invention, l'étape d'émission est réalisée selon un intervalle temporel inférieur à 1 μs. La constance de la durée de l'intervalle temporel selon laquelle l'émission de l'onde ultrasonore est réalisée contribue à compenser les erreurs pouvant résulter de la période de stabilisation.

Dans des modes de réalisation de l'invention, l'unité de commande comprend deux horloges, une première horloge étant utilisée pour compter la plus grande partie du temps de propagation, alors qu'une deuxième horloge est utilisée pour obtenir une mesure précise du temps de propagation, la deuxième horloge est déclenchée au plus proche du moment de réception de l'onde ultrasonore par le deuxième transducteur fonctionnant en tant que récepteur. En particulier, la première horloge démarre chaque cycle après la durée intercycle.

L'invention s'étend également à un débitmètre adapté pour mettre en œuvre un procédé selon l'invention.

En particulier, l'invention s'étend donc également à un débitmètre comprenant :

- **au moins** deux transducteurs à ultrasons adaptés pour être assemblés à une canalisation,

- une unité de commande programmée pour commander une génération de cycles successifs comprenant chacun :

 o une étape d'émission d'une onde ultrasonore par un premier transducteur à ultrasons parmi lesdits au moins deux transducteurs à ultrasons ;

 o une étape de réception de l'onde ultrasonore émise par un deuxième transducteur parmi lesdits au moins deux transducteurs à ultrasons ; et

 o une étape de mesure d'un temps de propagation de ladite onde ultrasonore depuis le premier transducteur à ultrasons jusqu'au deuxième transducteur à ultrasons,

le premier transducteur à ultrasons pour un cycle donné correspondant au deuxième transducteur à ultrasons pour un cycle succédant directement ledit cycle donné et le deuxième transducteur à ultrasons pour un cycle donné correspondant au premier transducteur à ultrasons pour le cycle succédant directement ledit cycle donné,

caractérisé en ce qu'un cycle donné est séparé d'un cycle précédant directement ledit cycle donné d'une durée, dite durée intercycle, supérieure ou égale à 15 ms, et en ce que l'unité de commande est programmée pour effectuer au moins une étape de calcul de débit de fluide dans laquelle un débit de fluide s'écoulant au moment d'un cycle donné dans la canalisation est calculé à partir d'une différence entre le temps de propagation mesuré pour ledit cycle donné et une moyenne entre le temps de propagation mesuré pour le cycle précédant et le temps de propagation mesuré pour le cycle succédant directement ledit cycle donné.

Par exemple, le premier transducteur et le deuxième transducteur sont adaptés pour être montés sur une canalisation de façon à être disposés en vis-à-vis l'un de l'autre selon une direction diagonale par rapport à un axe longitudinal de la canalisation. Néanmoins, rien n'empêche de prévoir, un débitmètre comprenant deux transducteurs adaptés pour être disposés à l'intérieur de la canalisation en vis-à-vis l'un de l'autre selon l'axe longitudinal de la canalisation. En outre, il est également possible de prévoir un débitmètre comprenant un unique transducteur à ultrasons et un réflecteur d'ondes ultrasonores disposé à l'intérieur de la canalisation. Cet unique transducteur à ultrasons est alors placé en regard du réflecteur de sorte que ce transducteur puisse émettre puis réceptionner des ondes ultrasonores en les réfléchissant sur le réflecteur. Dans ce cas, le premier transducteur et le deuxième transducteur sont les mêmes.

Dans certains modes de réalisation avantageux et selon l'invention, le débitmètre comprend ladite canalisation sur laquelle sont montés les deux transducteurs à ultrasons, cette canalisation présentant deux extrémités longitudinales comprenant un organe de raccordement.

L'invention concerne également un procédé de mesure de débit et un débitmètre caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

**[Description des dessins]**

D'autres buts, caractéristiques et avantages de l'invention apparaîtront à la lecture de la description suivante donnée à titre non limitatif de certains de ses modes de réalisation possibles et qui se réfère aux figures annexées dans lesquelles :

[Fig 1] la figure 1 est un schéma séquentiel représentant six cycles successifs d'un procédé de mesure de débit selon l'invention,

[Fig 2] la figure 2 est un schéma synoptique d'une coupe longitudinale d'un débitmètre selon un mode de réalisation de l'invention,

[Fig 3] la figure 3 comprend des diagrammes de temps représentant six cycles successifs d'un procédé de mesure de débit selon l'invention.

[Description des modes de réalisation]

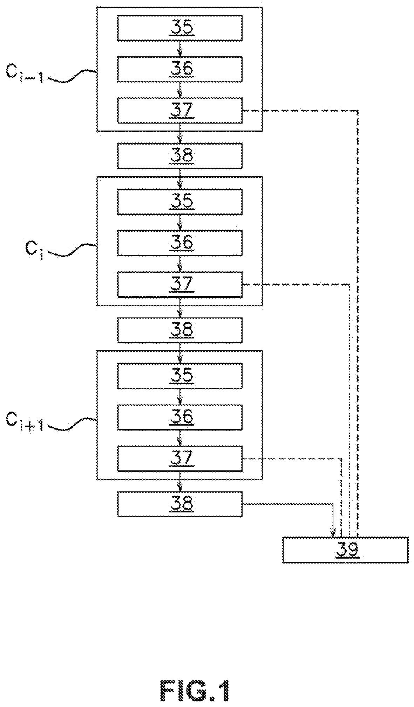

Un procédé 28 de mesure de débit d'un fluide s'écoulant dans une canalisation selon un mode de réalisation de l'invention est représenté à la figure 1. Ce procédé 28 de mesure de débit peut être mis en œuvre par tout type de débitmètre ultrasonore fonctionnant sur la base de mesures de différences de temps de propagation des ondes ultrasonores par au moins un transducteur à ultrasons.

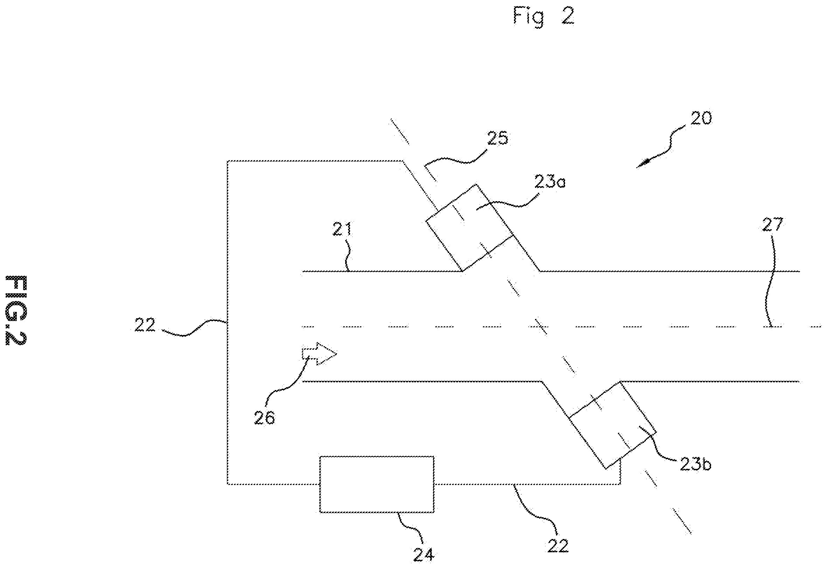

À titre d'exemple, le débitmètre 20 représenté à la figure 2 est adapté pour mettre en œuvre le procédé 28 de mesure. Ce débitmètre 20 comprend deux transducteurs 23a, 23b à ultrasons montés sur une canalisation 21 s'étendant longitudinalement selon et autour d'un axe 27 longitudinal théorique. La canalisation 21 comprend une paroi délimitant un passage dans lequel un fluide 26 peut s'écouler. Les transducteurs 23a, 23b sont montés sur la paroi de la canalisation 21 et disposés en vis-à-vis l'un de l'autre selon une direction 25 diagonale par rapport à l'axe 27 longitudinal de la canalisation 21. Chaque transducteur 23a, 23b est adapté pour émettre des ondes ultrasonores et pour recevoir des ondes ultrasonores. Ainsi chaque transducteur 23a, 23b peut fonctionner en tant que transducteur émetteur de façon à pouvoir émettre des ondes ultrasonores ou bien en tant que transducteur récepteur de façon à pouvoir recevoir des ondes ultrasonores. En particulier, lorsqu'un transducteur 23a, 23b fonctionne en tant que transducteur émetteur, ce transducteur 23a, 23b est adapté pour convertir un signal électrique en une onde ultrasonore. En outre, lorsqu'un transducteur 23a, 23b fonctionne en tant que transducteur récepteur, ce transducteur 23a, 23b est adapté pour convertir une onde ultrasonore en un signal électrique.

Les transducteurs 23a, 23b sont agencés pour qu'une onde ultrasonore émise par l'un de ces deux transducteurs puisse se propager au travers de la canalisation 21 selon ladite direction 25 diagonale pour être directement reçue par l'autre transducteur sans réflexion intermédiaire de l'onde ultrasonore sur une paroi de la canalisation.

En variante, rien n'empêche par exemple de prévoir un débitmètre comprenant deux transducteurs disposés à l'intérieur de la canalisation en vis-à-vis l'un de l'autre selon l'axe longitudinal de la canalisation. En outre, il est également possible de prévoir un débitmètre comprenant un unique transducteur à ultrasons et un réflecteur d'ondes ultrasonores disposés à l'intérieur de la canalisation. Cet unique transducteur à ultrasons est alors placé en regard du réflecteur de sorte que ce transducteur puisse émettre des ondes ultrasonores puis les réceptionner en les réfléchissant sur le réflecteur. Ce transducteur fonctionne alors tout d'abord en tant qu'émetteur puis en tant que récepteur. Le débitmètre 20 comprend également une unité 24 de commande reliée aux transducteurs 23a, 23b par des liaisons 22 électriquement conductrices. L'unité de commande comprend au moins un circuit intégré, notamment choisi parmi un microcontrôleur, un microprocesseur, un circuit intégré propre à une application (plus connu sous l'acronyme ASIC de l'anglais « application-specific integrated circuit »), un circuit logique programmable. L'unité de commande comprend également une mémoire. De préférence, l'unité de commande comprend également un générateur d'impulsion, un amplificateur de signal, un détecteur de passage à zéro, une capture de temps, une machine d'état de séquencement et un processeur de calcul. En particulier, l'unité 24 de commande comprend au moins une horloge temps réel. De préférence, l'unité 24 de commande comprend deux horloges. Une première horloge est utilisée pour compter la plus grande partie du temps de propagation. Cette horloge fonctionne à une fréquence supérieure à 10 MHz, par exemple de l'ordre de 16 MHz. Une deuxième horloge est utilisée pour obtenir une mesure précise du temps de propagation. Cette deuxième horloge est déclenchée au plus proche du moment de réception de l'onde ultrasonore par le transducteur fonctionnant en tant que récepteur. Cette deuxième horloge fonctionne à une fréquence supérieure à celle de la première horloge, notamment à une fréquence supérieure à 1 GHz, par exemple de l'ordre de 26 GHz.

Cette unité 24 de commande est adaptée pour commander chaque transducteur 23a, 23b pour les faire fonctionner en tant que transducteur émetteur ou en tant que transducteur récepteur. En particulier, lorsqu'un des deux transducteurs 23a, 23b est commandé pour fonctionner en tant que transducteur émetteur, l'autre transducteur 23a, 23b est commandé pour fonctionner en tant que transducteur récepteur.

Plus particulièrement, l'unité 24 de commande est adaptée pour alimenter le transducteur 23a, 23b commandé en tant que transducteur émetteur par un signal électrique, dit signal de commande, par l'intermédiaire de la liaison 22 électriquement conductrice reliant l'unité 24 de commande à ce transducteur 23a, 23b. Ce transducteur 23a, 23b fonctionnant en tant que transducteur émetteur est ainsi adapté pour convertir ce signal de commande en une onde ultrasonore qui se propage ensuite au travers de la canalisation 21 jusqu'à l'autre transducteur fonctionnant en tant que transducteur récepteur.

En outre, l'unité 24 de commande est adaptée pour effectuer une acquisition d'un signal électrique, dit signal de réception, généré par le transducteur 23a, 23b commandé pour fonctionner en tant que transducteur récepteur, ce signal de réception étant généré à partir d'une onde ultrasonore reçue par ce transducteur fonctionnant en tant que transducteur récepteur et transmis à l'unité 24 de commande par l'intermédiaire de la liaison 22 électriquement conductrice reliant l'unité 24 de commande à ce transducteur fonctionnant en tant que transducteur récepteur.

Par ailleurs, l'unité de commande est adaptée pour mesurer un temps *Tprop* de propagation d'une onde ultrasonore dans la canalisation 21 entre un transducteur 23a, 23b émettant cette onde ultrasonore et l'autre transducteur 23a, 23b. Pour ce faire l'unité de commande utilise son couple d'horloges pour mesurer le temps de propagation à partir d'un signal de commande émis par l'unité 24 de traitement et d'un signal de réception émis par le transducteur récepteur et acquis par l'unité 24 de traitement.

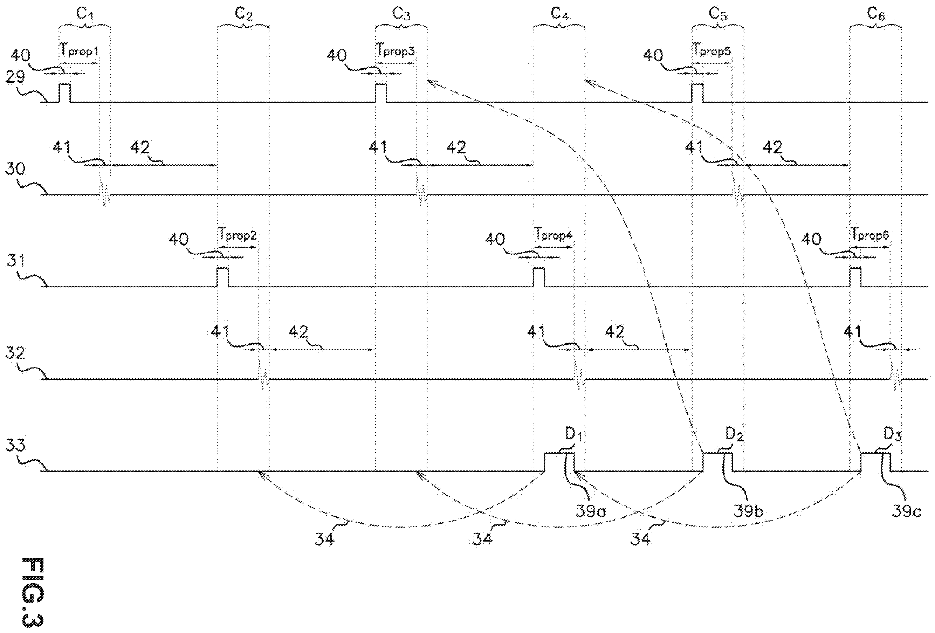

Ainsi, l'unité 24 de commande est adaptée pour commander une génération de cycles successifs, comme cela va à présent être explicité en référence aux figures 1 et 3, notamment dans le cas non limitatif de six cycles successifs notés $C_1$ à $C_6$.

Chaque cycle $C_i$ comprend :

- une étape 35 d'émission d'une onde ultrasonore par un premier transducteur choisi parmi les transducteurs 23a, 23b pour fonctionner en tant que transducteur émetteur,

- une étape 36 de réception de cette onde ultrasonore par le deuxième transducteur fonctionnant en tant que transducteur récepteur, et

- une étape 37 de mesure d'un temps de propagation Tpropi de ladite onde ultrasonore depuis le transducteur 23a, 23b fonctionnant en tant que transducteur émetteur jusqu'au transducteur 23a, 23b fonctionnant en tant que transducteur récepteur.

En particulier, pour chaque cycle $C_i$, lors d'une étape 35 d'émission, l'onde ultrasonore est émise sur un intervalle 40 temporel d'émission prédéfini (voir figure 3). En outre, pour chaque étape 36 de réception, l'onde ultrasonore est reçue sur un intervalle 41 temporel de réception (voir figure 3).

Plus particulièrement comme illustré à la figure 3, l'onde ultrasonore est générée par le transducteur fonctionnant en tant qu'émetteur à partir d'une impulsion électrique carrée, par exemple d'une durée d'une demi-longueur d'onde, ou bien à partir d'un signal carré d'une durée supérieure. En particulier, l'intervalle 40 temporel d'émission prédéfini est inférieur à 1 $\mu$s, plus particulièrement compris entre 100 ns et 250 ns, par exemple de l'ordre de 125 ns. En outre l'intervalle 41 temporel de réception prédéfini est inférieur à 40 $\mu$s, plus particulièrement compris entre 2 $\mu$s et 20 $\mu$s, par exemple de l'ordre de 5 $\mu$s.

Le procédé de mesure comprend au moins trois cycles successifs. Dans tout le texte, on entend par le terme « directement », en particulier dans les expressions « cycle $C_{i+1}$ succédant directement le cycle $C_i$ donné » et « cycle $C_{i-1}$ précédant directement le cycle $C_i$ donné » que le cycle $C_{i+1}$ succédant directement le cycle $C_i$ donné correspond au premier cycle effectué après le cycle $C_i$ donné et que le cycle $C_{i-1}$ précédant directement le cycle $C_i$ donné correspond au dernier cycle effectué avant le cycle $C_i$ donné. Le cycle $C_i$ donné peut correspondre à tout cycle d'un procédé de mesure selon l'invention.

Le transducteur 23a, 23b fonctionnant en tant que transducteur émetteur et le transducteur 23a, 23b fonctionnant en tant que transducteur récepteur sont sélectionnés en alternance entre deux cycles successifs. Ainsi, le transducteur 23a, 23b fonctionnant en tant que transducteur émetteur pour un cycle $C_i$ donné fonctionne en tant que transducteur récepteur pour un cycle $C_{i+1}$ succédant directement le cycle $C_i$ donné. En outre, le transducteur 23a, 23b fonctionnant en tant que transducteur récepteur pour un cycle $C_i$ donné fonctionne en tant que transducteur émetteur pour un cycle $C_{i+1}$ succédant directement le cycle $C_i$ donné. Ainsi, pour un cycle $C_i$ donné, l'onde ultrasonore est émise par un premier transducteur 23a, 23b fonctionnant en tant que transducteur émetteur vers le deuxième transducteur 23a, 23b fonctionnant en tant que transducteur récepteur. En d'autres termes, l'onde ultrasonore est émise selon un premier sens de propagation par rapport au sens d'écoulement du fluide 26, par exemple vers l'amont. Pour le cycle $C_{i+1}$ succédant directement le cycle $C_i$, l'onde ultrasonore est émise par le deuxième transducteur 23a, 23b fonctionnant en tant que transducteur émetteur vers le premier transducteur 23a, 23b fonctionnant en tant que transducteur récepteur. En d'autres termes, l'onde ultrasonore est émise selon un deuxième sens de propagation opposé au premier sens, par exemple vers l'aval.

Le procédé 28 de mesure de débit permet de mesurer un débit d'un fluide 26 s'écoulant dans la canalisation 21 entre les deux transducteurs 23a, 23b à plusieurs instants donnés.

Pour fixer les idées, la figure 3 donne des diagrammes temporels correspondant à six cycles successifs $C_1$ à $C_6$.

La ligne 29 est un diagramme de temps représentant les étapes d'émission pour lesquelles le transducteur 23a fonctionne en tant que transducteur émetteur. Lorsqu'une étape 35 d'émission est en cours, celle-ci est représentée par un créneau sur la ligne 29.

La ligne 30 est un diagramme de temps représentant les étapes de réception pour lesquelles le transducteur 23b fonctionne en tant que transducteur récepteur. Lorsqu'une étape 36 de réception est en cours, celle-ci est représentée par un signal sur la ligne 30.

La ligne 31 est un diagramme de temps représentant les étapes d'émission pour lesquelles le transducteur 23b fonctionne en tant que transducteur émetteur. Lorsqu'une étape 35 d'émission est en cours, celle-ci est représentée par un créneau sur la ligne 31.

La ligne 32 est un diagramme de temps représentant les étapes de réception pour lesquelles le transducteur 23a fonctionne en tant que transducteur récepteur. Lorsqu'une étape 36 de réception est en cours, celle-ci est représentée par un signal sur la ligne 32.

La ligne 33 est un diagramme de temps représentant des étapes de calcul de débit, décrites plus en détail ci-après. Lorsqu'une étape 39 de calcul de débit est en cours, celle-ci est représentée par un créneau sur la ligne 33. Les flèches 34 entre les étapes de calcul et les cycles indiquent pour quel cycle le débit de fluide 26 est calculé (ce débit calculé étant alors représentatif du débit de fluide 26 s'écoulant dans la canalisation 21 durant le cycle pointé par la flèche 34).

Par ailleurs, l'étape 35 d'émission d'un cycle $C_i$ donné est séparée de l'étape 36 de réception du cycle $C_{i-1}$ précédant directement ledit cycle $C_i$ donné par une durée, dite durée 42 intercycle, supérieure ou égale à 15 ms. Plus particulièrement, cette durée 42 intercycle est comprise entre 125 ms et 4 s, par exemple de l'ordre de 500 ms. Cette durée 42 intercycle peut être fixe ou bien variable. En particulier, la première horloge permet de démarrer chaque cycle après ladite durée 42 intercycle.

Comme vu précédemment, chaque cycle $C_i$ comprend une étape 37 de mesure d'un temps de propagation Tpropi entre les deux transducteurs 23a, 23b de l'onde ultrasonore émise durant ce cycle $C_i$. Le temps de propagation de l'onde ultrasonore est mesuré à l'aide du couple d'horloges.

En outre, le procédé comprend au moins une étape 39 de calcul de débit de fluide dans laquelle un débit d'un fluide s'écoulant au moment d'un cycle donné dans la canalisation est calculé. Chaque étape 39 de calcul de débit de fluide peut être effectuée par l'unité de commande. En variante, rien n'empêche de prévoir une unité de calcul externe à l'unité de commande et permettant d'effectuer les étapes de calcul de débit. Les étapes de calcul de débit sont de préférence effectuées au moment des cycles, comme illustré par la ligne 33 de la figure 3. Néanmoins les étapes de calcul de débit peuvent également être effectuées entre les cycles.

Pour chaque étape 39 de calcul, un débit de fluide s'écoulant au moment d'un cycle $C_i$ donné dans la canalisation est calculé à partir du temps de propagation mesuré lors de ce cycle $C_i$ donné, du temps de propagation mesuré lors d'un cycle $C_{i-1}$ précédant directement ce cycle $C_i$ donné, et du temps de propagation mesuré d'un cycle $C_{i+1}$ succédant directement le cycle $C_i$ donné. En particulier, ce débit est calculé à partir d'une différence entre :

- le temps $Tprop_i$ de propagation mesuré lors de l'étape 37 de mesure de temps de propagation dudit cycle $C_i$ donné et
- une moyenne du temps $Tprop_{i-1}$ de propagation mesuré lors de l'étape 37 de mesure de temps de propagation d'un cycle $C_{i-1}$ précédant directement le cycle $C_i$ donné et du temps $Tprop_{i+1}$ de propagation mesuré lors de l'étape 37 de mesure de temps de propagation d'un cycle $C_{i+1}$ succédant directement le cycle $C_i$ donné.

Ainsi, le débit du fluide dans la canalisation au moment d'un cycle $C_i$ donné, est calculé à partir de cette différence de temps de propagation selon la formule [Math. 1] suivante :

[Math. 1]

$$Tprop_i - \frac{Tprop_{i-1} + Tprop_{i+1}}{2}$$

où :

- $Tprop_i$ est le temps de propagation de l'onde ultrasonore émise lors du cycle $C_i$ donné, cette onde ultrasonore étant émise dans un premier sens par rapport au sens d'écoulement du fluide dans la canalisation,
- $Tprop_{i-1}$ est le temps de propagation de l'onde ultrasonore émise dans un sens opposé audit premier sens lors d'un cycle $C_{i-1}$ précédant directement ledit cycle $C_i$ donné,
- $Tprop_{i+1}$ est le temps de propagation de l'onde ultrasonore émise dans un sens opposé audit premier sens lors d'un cycle $C_{i+1}$ succédant directement ledit cycle $C_i$ donné.

Par exemple le débit $D_2$ du fluide dans la canalisation au moment du cycle $C_3$ est calculé lors de l'étape 39 de calcul à partir de cette différence de temps de propagation selon la formule [Math. 2] suivante.

[Math. 2]

$$Tprop_3 - \frac{Tprop_2 + Tprop_4}{2}$$

Plus particulièrement, de préférence, le débit de fluide est déterminé à partir d'un tableau prédéterminé dans lequel des résultats de différence de temps de propagation sont associés à des débits. Le tableau peut également prendre en compte la température du fluide. En particulier, comme indiqué par les flèches 34 en pointillés sur la figure 3, le débit $D_1$ calculé lors de l'étape 39a de calcul correspond au débit du fluide dans la canalisation au moment du cycle $C_2$, le débit $D_2$ calculé lors de l'étape 39b de calcul correspond au débit du fluide dans la canalisation au moment du cycle $C_3$ et le débit $D_3$ calculé lors de l'étape 39c de calcul correspond au débit du fluide dans la canalisation au moment du cycle $C_4$.

Un procédé de mesure de débit selon l'invention permet d'obtenir des débits plus fiables que ceux obtenus par des procédés de mesure de débit connus. En effet, comme vu précédemment, les procédés de mesure de débit connus comprennent deux cycles successifs, chaque cycle comprenant une étape d'émission d'une onde ultrasonore par un premier transducteur, similaire à l'étape 35, une étape de réception de l'onde ultrasonore par un deuxième transducteur, similaire à l'étape 36, et une étape de mesure du temps de propagation de l'onde ultrasonore entre les deux transducteurs, similaire à l'étape 37, et les rôles d'émission ou de réception des premier et deuxième transducteurs étant intervertis pour deux cycles successifs. À la différence de la présente invention la durée intercycle est de l'ordre de 4 ms, et le débit est calculé à partir d'une différence entre les temps de propagation des ondes ultrasonores mesurés pour deux cycles successifs.

Les inventeurs ont remarqué que, dans ces procédés de mesure de débits connus, les débits calculés à partir des temps de propagation des ondes ultrasonores entre les transducteurs sont faussés du fait d'une asymétrie des conditions de fonctionnement du débitmètre entre deux cycles successifs. En d'autres termes, dans les procédés de mesure de débits connus, les conditions de fonctionnement du débitmètre lors d'un premier cycle peuvent être différentes des conditions de fonctionnement lors d'un deuxième cycle. Par exemple, la mesure du temps de propagation de l'onde ultrasonore émise lors du deuxième cycle peut être faussée par des échos dans la canalisation de l'onde ultrasonore émise lors du premier cycle du fait de la durée de l'ordre de 4 ms entre ces deux cycles. Le calcul du débit peut également être faussé par une modification de température du fluide s'écoulant dans la conduite ou une modification de la température de l'unité de commande entre deux cycles successifs.

Un procédé de mesure de débit selon l'invention permet de calculer le débit à partir de mesures de temps de propagation d'ondes ultrasonores réalisées dans de mêmes conditions de fonctionnement du débitmètre ou au moins de compenser une asymétrie des conditions de fonctionnement du débitmètre.

En particulier, en insérant une durée 42 intercycle supérieure ou égale à 15ms entre deux cycles successifs, un procédé de mesure de débit selon l'invention permet d'éviter qu'un écho dans la canalisation d'une onde ultrasonore émise lors d'un cycle donné ne perturbe la mesure d'un temps de propagation d'une onde ultrasonore émise lors d'un cycle ultérieur. En effet, cette durée 42 intercycle est suffisamment grande pour que les échos dans la canalisation se dissipent.

En outre, un procédé de mesure de débit selon l'invention permet de compenser une évolution linéaire des conditions de fonctionnement du débitmètre, notamment une évolution linéaire de la température, par le fait d'insérer une durée 42 intercycle supérieure ou égale à 15ms (notamment une durée fixe) entre deux cycles successifs et par le fait que le débit du fluide dans la canalisation au moment d'un cycle $C_i$ donné est calculé à partir d'une différence entre le temps de propagation de l'onde ultrasonore émise lors de ce cycle $C_i$ donné et une moyenne des temps de propagation de l'onde ultrasonore émise lors du cycle $C_{i-1}$ précédant directement ledit cycle donné et de l'onde ultrasonore émise lors du cycle $C_{i+1}$ succédant directement ledit cycle donné. En effet, la moyenne des temps de propagation de l'onde ultrasonore émise lors du cycle $C_{i-1}$ et de l'onde ultrasonore émise lors du cycle $C_{i+1}$ permet d'amoindrir une évolution linéaire des conditions de fonctionnement du débitmètre entre ledit cycle $C_i$ donné et le cycle $C_{i+1}$.

Un tel procédé de mesure de débit est simple, rapide et peu coûteux à mettre en œuvre mais également économes en énergie. En particulier, l'unité de commande peut être programmée facilement pour mettre en œuvre un tel procédé (durée 42 intercycle entre chaque cycle étant de préférence constante, alternance du mode de fonctionnement de chaque transducteur à ultrasons entre deux cycles, c'est-à-dire alternance du fonctionnement en tant que transducteur émetteur avec le fonctionnement en tant que transducteur récepteur).

Ainsi, les débits calculés selon un procédé de mesure de débit selon l'invention sont plus précis et plus fiables que ceux calculés selon les procédés de mesure de débits connus bien que dans un procédé de mesure de débit selon l'invention la durée 42 intercycle entre deux cycles successifs soit longue par rapport à celle entre deux cycles de procédés de mesure connus. En particulier, il était admis que pour obtenir un débit relativement fiable à partir de deux temps de propagation mesurés lors de deux cycles successifs, il était nécessaire que le deuxième cycle de ces deux cycles soit effectué immédiatement après le premier cycle, c'est-à-dire après une durée de l'ordre de 4 ms. Or, un procédé de mesure de débit selon l'invention démontre qu'un débit plus fiable que ceux pouvant être calculés selon des procédés de débit connus peut être obtenu en séparant chaque cycle par une durée 42 intercycle supérieure à 15 ms.

En outre, un procédé de mesure de débit selon l'invention présente l'avantage de calculer un débit pour chaque cycle après avoir effectué trois cycles par rapport aux procédés de mesure de débit connus, pour lesquels un unique débit de fluide est calculé tous les deux cycles. Un procédé selon l'invention permet également d'obtenir des mesures de débit fiables tout en éloignant temporellement les cycles les uns des autres et donc de réduire la consommation énergétique.

Par ailleurs, de préférence, un procédé de mesure selon l'invention comprend une étape 38 de mise en veille au moins partielle de l'unité 24 de commande entre chaque cycle. Lorsque l'unité 24 de commande est mise en veille, au moins une partie des composants électroniques de l'unité 24 de commande ne sont pas mis sous tension. En particulier, l'amplificateur et les compteurs de temps ne sont pas mis sous tension. De préférence, le processeur n'est pas non plus mis sous tension lorsque l'unité 24 de commande est en veille, toute l'unité 24 est alors en veille. L'unité 24 de commande étant mise en veille durant la durée 42 intercycle, les deux transducteurs 23a, 23b à ultrasons ne sont pas alimentés électriquement. En particulier, la première horloge permet de réveiller l'unité de commande de façon à effectuer chaque cycle, c'est-à-dire que les composants électroniques de l'unité 24 de commande nécessaires sont remis sous tension. Les étapes de calcul peuvent alors être effectuées lorsque l'unité 24 de commande est éveillée pendant les cycles.

Les inventeurs ont remarqué que le manque de précision des débits calculés selon les procédés de mesures connus peut également résulter d'une asymétrie d'un état des composants électroniques du débitmètre entre deux cycles successifs. En particulier, les procédés de mesures connus peuvent comprendre plusieurs étapes de mesure de débit successives et comprenant chacune un premier cycle et un deuxième cycle tels que ceux précédemment décrits. Les étapes de mesures de débit sont généralement séparées les unes des autres par une durée de l'ordre de 0,5 s. L'unité de commande peut être mise en veille entre les étapes de mesure de débit afin de réduire sa consommation électrique. Néanmoins, lorsque l'unité de commande est réveillée pour effectuer une étape de mesure de débit, le premier cycle de cette étape de mesure de débit peut être effectué alors qu'une période de stabilisation de l'unité de commande n'est pas terminée. Durant cette période de stabilisation, l'état de fonctionnement des composants électroniques de l'unité de commande peut évoluer avant d'atteindre un état souhaité (par exemple chargement des condensateurs, chauffe de l'électronique). Cette période de stabilisation transitoire (ou période d' « initialisation ») peut ainsi fausser les mesures du fait que l'état de fonctionnement des composants électroniques de l'unité de commande peut être différent entre les deux cycles d'une même étape de mesure de débit.

Dans un procédé de mesure de débit selon l'invention, le fait de mettre l'unité de commande en veille entre chaque cycle permet d'avoir un même état de fonctionnement des composants électroniques de l'unité 24 de commande pour chaque cycle. En effet, chaque cycle peut être effectué pendant ladite période de stabilisation de l'unité de commande. Les erreurs pouvant résulter de la période de stabilisation de l'unité de commande sont ainsi compensées. Ainsi, un procédé de mesure de débit selon l'invention permet d'améliorer la précision des débits calculés. En outre, mettre l'unité de commande en veille entre chaque cycle permet de réduire la consommation énergétique du débitmètre.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, la canalisation 21 peut être comprise dans le débitmètre, cette canalisation présentant alors des organes de raccordement à ses extrémités longitudinales de façon à pouvoir raccorder la canalisation à un réseau de canalisation. En outre, le débitmètre peut embarquer plus d'une paire de transducteurs à ultrasons. Une unité de traitement peut alors être associée à chaque paire de transducteurs. En variante, une unique unité de traitement peut commander successivement les différentes paires de transducteurs.

**Revendications**

1. Procédé de mesure de débit d'un fluide dans une canalisation (21) à l'aide d'au moins deux transducteurs à ultrasons, le procédé comportant une génération de cycles successifs commandés par une unité (24) de commande, chaque cycle comprenant :

   - une étape (35) d'émission d'une onde ultrasonore par un premier transducteur (23a, 23b) à ultrasons parmi lesdits au moins deux transducteurs à ultrasons;
   - une étape (36) de réception de ladite onde ultrasonore par un deuxième transducteur (23a, 23b) à ultrasons

EP 4 217 686 B1

parmi lesdits au moins deux transducteurs à ultrasons ; et

- une étape (37) de mesure d'un temps de propagation de ladite onde ultrasonore depuis le premier transducteur (23a, 23b) à ultrasons jusqu'au deuxième transducteur (23a, 23b) à ultrasons,

le premier transducteur (23a, 23b) à ultrasons pour un cycle donné correspondant au deuxième transducteur (23a, 23b) à ultrasons pour un cycle succédant directement ledit cycle donné et le deuxième transducteur (23a, 23b) à ultrasons pour un cycle donné correspondant au premier transducteur (23a, 23b) à ultrasons pour le cycle succédant directement ledit cycle donné,

le procédé étant **caractérisé en ce qu'**un cycle donné est séparé d'un cycle précédant directement ledit cycle donné d'une durée, dite durée (42) intercycle, supérieure ou égale à 15 ms, et **en ce qu'**il comprend au moins une étape (39) de calcul de débit de fluide dans laquelle un débit du fluide s'écoulant au moment d'un cycle donné dans la canalisation est calculé à partir d'une différence entre le temps de propagation mesuré pour ledit cycle donné et une moyenne entre le temps de propagation mesuré pour le cycle précédent et le temps de propagation mesuré pour le cycle succédant directement ledit cycle donné.

2. Procédé selon la revendication 1, **caractérisé en ce que** ladite durée (42) intercycle est comprise entre 15 ms et 4000 ms.

3. Procédé selon l'une quelconque des revendications 1 ou 2, **caractérisé en ce qu'**il comprend une étape (38) de mise en veille au moins partielle de l'unité (24) de commande entre chaque cycle.

4. Procédé selon la revendication 3, dans lequel, lorsque l'unité de commande est réveillée pour effectuer une étape de mesure de débit, le procédé comprend une période de stabilisation de l'unité de commande, chaque cycle étant effectué pendant ladite période de stabilisation de l'unité de commande.

5. Procédé selon l'une des revendications 1 à 4, dans lequel, l'onde ultrasonore est générée par un premier transducteur (23a, 23b) fonctionnant en tant qu'émetteur à partir d'une impulsion électrique carrée.

6. Procédé selon l'une des revendications 1 à 5, dans lequel, l'étape d'émission (35) est réalisée selon un intervalle temporel inférieur à 1 μs.

7. Procédé selon l'une des revendication 1 à 6, dans lequel, l'unité (24) de commande comprend deux horloges, une première horloge étant utilisée pour compter la plus grande partie du temps de propagation, alors qu'une deuxième horloge est utilisée pour obtenir une mesure précise du temps de propagation, la deuxième horloge est déclenchée au plus proche du moment de réception de l'onde ultrasonore par le deuxième transducteur (23a, 23b) fonctionnant en tant que récepteur.

8. Procédé selon la revendication 7, dans lequel, la première horloge démarre chaque cycle après la durée (42) intercycle.

9. Débitmètre comprenant :

- au moins deux transducteurs (23a, 23b) à ultrasons adaptés pour être assemblés à une canalisation (21),
- une unité (24) de commande programmée pour commander une génération de cycles successifs comprenant chacun :

o une étape (35) d'émission d'une onde ultrasonore par un premier transducteur (23a, 23b) à ultrasons parmi lesdits au moins deux transducteurs à ultrasons;

o une étape (36) de réception de l'onde ultrasonore émise par un deuxième transducteur parmi lesdits au moins deux transducteurs à ultrasons; et

o une étape (37) de mesure d'un temps de propagation de ladite onde ultrasonore depuis le premier transducteur (23a, 23b) à ultrasons jusqu'au deuxième transducteur (23a, 23b) à ultrasons,

le premier transducteur (23a, 23b) à ultrasons pour un cycle donné correspondant au deuxième transducteur (23a, 23b) à ultrasons pour un cycle succédant directement ledit cycle donné et le deuxième transducteur (23a, 23b) à ultrasons pour un cycle donné correspondant au premier transducteur (23a, 23b) à ultrasons pour le cycle succédant directement ledit cycle donné, **caractérisé en ce qu'**un cycle donné est séparé d'un cycle précédant directement ledit cycle donné d'une durée, dite durée (42) intercycle, supérieure ou égale à 15 ms, et **en ce que** l'unité de commande est programmée pour effectuer au moins une étape (39) de calcul de débit de fluide dans laquelle un débit d'un fluide s'écoulant au moment d'un cycle donné dans la canalisation est calculé à partir d'une différence entre le temps de propagation mesuré pour ledit cycle donné et une moyenne entre le temps de propagation mesuré pour le cycle précédant et le temps de propagation mesuré pour le cycle succédant directement ledit cycle donné.

10. Débitmètre selon la revendication 9, **caractérisé en ce qu'**il comprend ladite canalisation (21) sur laquelle sont montés les deux transducteurs (23a, 23b) à ultrasons, cette canalisation (21) présentant deux extrémités longitudinales comprenant un organe de raccordement.

**Patentansprüche**

1. Verfahren zur Messung der Durchflussrate eines Fluids in einer Leitung (21) mithilfe von mindestens zwei Ultraschall-Messwandlern, wobei das Verfahren eine Erzeugung von aufeinander folgenden Zyklen umfasst, die durch eine Steuereinheit (24) gesteuert werden, wobei jeder Zyklus umfasst:

   - einen Schritt (35) des Sendens einer Ultraschallwelle durch einen ersten Ultraschall-Messwandler (23a, 23b) unter den mindestens zwei Ultraschall-Messwandlern;
   - einen Schritt (36) des Empfangens der Ultraschallwelle durch einen zweiten Ultraschall-Messwandler (23a, 23b) unter den mindestens zwei Ultraschall-Messwandlern; und
   - einen Schritt (37) des Messens einer Ausbreitungszeit der Ultraschallwelle von dem ersten Ultraschall-Messwandler (23a, 23b) bis zu dem zweiten Ultraschall-Messwandler (23a, 23b),

   wobei der erste Ultraschall-Messwandler (23a, 23b) bei einem gegebenen Zyklus dem zweiten Ultraschall-Messwandler (23a, 23b) bei einem auf den gegebenen Zyklus unmittelbar folgenden Zyklus entspricht und wobei der zweite Ultraschall-Messwandler (23a, 23b) bei einem gegebenen Zyklus dem ersten Ultraschall-Messwandler (23a, 23b) bei dem auf den gegebenen Zyklus unmittelbar folgenden Zyklus entspricht, wobei das Verfahren **dadurch gekennzeichnet ist, dass** ein gegebener Zyklus von einem dem gegebenen Zyklus unmittelbar vorausgehenden Zyklus um eine Dauer, Zwischenzyklusdauer (42) genannt, größer oder gleich 15 ms getrennt ist, und dass es mindestens einen Schritt (39) des Berechnens der Durchflussrate des Fluids umfasst, wobei eine Durchflussrate des Fluids, das zum Zeitpunkt eines gegebenen Zyklus in der Leitung fließt, ausgehend von einer Differenz zwischen der für den gegebenen Zyklus gemessenen Ausbreitungszeit und einem Mittelwert zwischen der für den vorhergehenden Zyklus gemessenen Ausbreitungszeit und der für den auf den gegebenen Zyklus unmittelbar folgenden Zyklus gemessenen Ausbreitungszeit berechnet wird.

2. Verfahren nach Anspruch 1, **dadurch gekennzeichnet, dass** die Zwischenzyklusdauer (42) zwischen 15 ms und 4000 ms liegt.

3. Verfahren nach einem der Ansprüche 1 oder 2, **dadurch gekennzeichnet, dass** es einen Schritt (38) des mindestens partiellen Versetzens der Steuereinheit (24) in den Standby-Betrieb zwischen jedem Zyklus umfasst.

4. Verfahren nach Anspruch 3, wobei, wenn die Steuereinheit wieder geweckt wird, um einen Schritt des Messens der Durchflussrate durchzuführen, das Verfahren einen Stabilisierungszeitraum der Steuereinheit umfasst, wobei jeder Zyklus während des Stabilisierungszeitraums der Steuereinheit durchgeführt wird.

5. Verfahren nach einem der Ansprüche 1 bis 4, wobei die Ultraschallwelle von einem ersten Messwandler (23a, 23b), der als Sender arbeitet, ausgehend von einem elektrischen Rechteckimpuls erzeugt wird.

6. Verfahren nach einem der Ansprüche 1 bis 5, wobei der Schritt des Sendens (35) gemäß einem Zeitintervall von weniger als 1 μs ausgeführt wird.

7. Verfahren nach einem der Ansprüche 1 bis 6, wobei die Steuereinheit (24) zwei Uhren umfasst, wobei eine erste Uhr dazu verwendet wird, den überwiegenden Teil der Ausbreitungszeit zu zählen, während eine zweite Uhr dazu verwendet wird, eine genaue Messung der Ausbreitungszeit zu erhalten, wobei die zweite Uhr ganz kurz vor dem Empfangszeitpunkt der Ultraschallwelle durch den als Empfänger arbeitenden zweiten Messwandler (23a, 23b) ausgelöst wird.

8. Verfahren nach Anspruch 7, wobei die erste Uhr jeden Zyklus nach der Zwischenzyklusdauer (42) startet.

**9.** Durchflussmesser, umfassend:

- mindestens zwei Ultraschall-Messwandler (23a, 23b), die dazu geeignet sind, an einer Leitung (21) angebracht zu werden,
- eine Steuereinheit (24), die dazu programmiert ist, eine Erzeugung von aufeinander folgenden Zyklen zu steuern, von denen jeder umfasst:

  ◦ einen Schritt (35) des Sendens einer Ultraschallwelle durch einen ersten Ultraschall-Messwandler (23a, 23b) unter den mindestens zwei Ultraschall-Messwandlern;
  ◦ einen Schritt (36) des Empfangens der gesendeten Ultraschallwelle durch einen zweiten Ultraschall-Messwandler unter den mindestens zwei Ultraschall-Messwandlern; und
  ◦ einen Schritt (37) des Messens einer Ausbreitungszeit der Ultraschallwelle von dem ersten Ultraschall-Messwandler (23a, 23b) bis zu dem zweiten Ultraschall-Messwandler (23a, 23b),

wobei der erste Ultraschall-Messwandler (23a, 23b) bei einem gegebenen Zyklus dem zweiten Ultraschall-Messwandler (23a, 23b) bei einem auf den gegebenen Zyklus unmittelbar folgenden Zyklus entspricht und wobei der zweite Ultraschall-Messwandler (23a, 23b) bei einem gegebenen Zyklus dem ersten Ultraschall-Messwandler (23a, 23b) bei dem auf den gegebenen Zyklus unmittelbar folgenden Zyklus entspricht, **dadurch gekennzeichnet**, das ein gegebener Zyklus von einem dem gegebenen Zyklus unmittelbar vorausgehenden Zyklus um eine Dauer, Zwischenzyklusdauer (42) genannt, größer oder gleich 15 ms getrennt ist, und dass die Steuereinheit dazu programmiert ist, mindestens einen Schritt (39) des Berechnens der Durchflussrate des Fluids durchzuführen, wobei eine Durchflussrate eines Fluids, das zum Zeitpunkt eines gegebenen Zyklus in der Leitung fließt, ausgehend von einer Differenz zwischen der für den gegebenen Zyklus gemessenen Ausbreitungszeit und einem Mittelwert zwischen der für den vorhergehenden Zyklus gemessenen Ausbreitungszeit und der für den auf den gegebenen Zyklus unmittelbar folgenden Zyklus gemessenen Ausbreitungszeit berechnet wird.

**10.** Durchflussmesser nach Anspruch 9, **dadurch gekennzeichnet, dass** er die Leitung (21) umfasst, an der die beiden Ultraschall-Messwandler (23a, 23b) montiert sind, wobei diese Leitung (21) zwei Längsenden aufweist, die ein Anschlusselement umfassen.

## Claims

**1.** A method for measuring the flow rate of a fluid in a pipe (21) using at least two ultrasound transducers, the method comprising generating successive cycles which are controlled by a control unit (24), each cycle comprising:

- a step (35) of a first ultrasound transducer (23a, 23b) from among said at least two ultrasound transducers transmitting an ultrasound wave;
- a step (36) of a second ultrasound transducer (23a, 23b) from among said at least two ultrasound transducers receiving said ultrasound wave; and
- a step (37) of measuring a time for said ultrasound wave to be propagated from the first ultrasound transducer (23a, 23b) to the second ultrasound transducer (23a, 23b),

  the first ultrasound transducer (23a, 23b) for a given cycle corresponding to the second ultrasound transducer (23a, 23b) for a cycle directly succeeding said given cycle and the second ultrasound transducer (23a, 23b) for a given cycle corresponding to the first ultrasound transducer (23a, 23b) for the cycle directly succeeding said given cycle,
  the method being **characterized in that** a given cycle is separated from a cycle directly preceding said given cycle by a duration, referred to as the intercycle duration (42), which is greater than or equal to 15 ms, and **in that** it comprises at least one fluid flow rate computation step (39) in which a flow rate of the fluid flowing at the time of a given cycle in the pipe is computed on the basis of a difference between the propagation time measured for said given cycle and an average between the propagation time measured for the preceding cycle and the propagation time measured for the cycle directly succeeding said given cycle.

**2.** The method as claimed in claim 1, **characterized in that** said intercycle duration (42) is between 15 ms and 4000 ms.

**3.** The method as claimed in either one of claims 1 and 2, **characterized in that** it comprises a step (38) of at least partially putting the control unit (24) on standby between each cycle.

4. The method as claimed in claim 3, in which, when the control unit is activated to carry out a flow rate measurement step, the method comprises a stabilization period of the control unit, each cycle being carried out during said stabilization period of the control unit.

5. The method as claimed in one of claims 1 to 4, in which the ultrasound wave is generated by a first transducer (23a, 23b) operating as a transmitter on the basis of a square electrical pulse.

6. The method as claimed in one of claims 1 to 5, in which the transmission step (35) is performed in a time interval which is less than 1 $\mu$s.

7. The method as claimed in one of claims 1 to 6, in which the control unit (24) comprises two clocks, a first clock being used to count most of the propagation time, while a second clock is used to obtain a precise measurement of the propagation time, the second clock being triggered as close as possible to the moment at which the ultrasound wave is received by the second transducer (23a, 23b) operating as a receiver.

8. The method as claimed in claim 7, in which the first clock starts each cycle after the intercycle duration (42).

9. A flowmeter comprising:

   - at least two ultrasound transducers (23a, 23b) which are adapted to be joined to a pipe (21),
   - a control unit (24) programmed to control generation of successive cycles, each comprising:

     ◦ a step (35) of a first ultrasound transducer (23a, 23b) from among said at least two ultrasound transducers transmitting an ultrasound wave;
     ◦ a step (36) of a second transducer from among said at least two ultrasound transducers receiving the transmitted ultrasound wave; and
     ◦ a step (37) of measuring a time for said ultrasound wave to be propagated from the first ultrasound transducer (23a, 23b) to the second ultrasound transducer (23a, 23b),

   the first ultrasound transducer (23a, 23b) for a given cycle corresponding to the second ultrasound transducer (23a, 23b) for a cycle directly succeeding said given cycle and the second ultrasound transducer (23a, 23b) for a given cycle corresponding to the first ultrasound transducer (23a, 23b) for the cycle directly succeeding said given cycle,
   **characterized in that** a given cycle is separated from a cycle directly preceding said given cycle by a duration, referred to as the intercycle duration (42), which is greater than or equal to 15 ms, and **in that** the control unit is programmed to carry out at least one fluid flow rate computation step (39) in which a flow rate of a fluid flowing at the time of a given cycle in the pipe is computed on the basis of a difference between the propagation time measured for said given cycle and an average between the propagation time measured for the preceding cycle and the propagation time measured for the cycle directly succeeding said given cycle.

10. The flowmeter as claimed in claim 9, **characterized in that** it comprises said pipe (21) on which the two ultrasound transducers (23a, 23b) are mounted, this pipe (21) having two longitudinal ends comprising a connecting member.

**FIG.1**

Fig 2

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110246098 A
- EP 1913342 A
- EP 3355035 A